# EUROPÄISCHE PATENTSCHRIFT

(11) **EP 3 423 290 B1**
(45) Veröffentlichungstag und Bekanntmachung des Hinweises auf die Patenterteilung: **29.12.2021**
(21) Anmeldenummer: 17708774.9
(22) Anmeldetag: 03.03.2017
(51) Int. Cl.: B60B 35/12, B60B 35/14

(54) **NUTZFAHRZEUG, INSBESONDERE SCHWERLASTFAHRZEUG UND RADBAUGRUPPE FÜR EIN DERARTIGES NUTZFAHRZEUG**
UTILITY VEHICLE, IN PARTICULAR A HEAVY GOODS VEHICLE, AND WHEEL ASSEMBLY FOR SUCH A UTILITY VEHICLE
VÉHICULE UTILITAIRE, NOTAMMENT VÉHICULE POUR CHARGES LOURDES ET GROUPE ESSIEU POUR UN TEL VÉHICULE UTILITAIRE

(30) Priorität: 04.03.2016 DE 102016203577
(43) Veröffentlichungstag der Anmeldung: 09.01.2019
(73) Patentinhaber: Goldhofer AG, 87700 Memmingen (DE)
(72) Erfinder: SOLLIK, Robert, 87700 Memmingen (DE); WÜRZLER, Mathias, 87700 Memmingen (DE); MERKEL, Felix, 87700 Memmingen (DE)
(74) Vertreter: Weickmann & Weickmann PartmbB
(86) Internationale Anmeldenummer: PCT/EP2017/055041
(87) Internationale Veröffentlichungsnummer: WO 2017/149136

(56) Entgegenhaltungen:
- EP-A2- 2 314 469
- WO-A1-2013/167279
- WO-A1-2014/053478

## Beschreibung

Die Erfindung betrifft ein Nutzfahrzeug, insbesondere Schwerlastfahrzeug, umfassend einen Fahrzeugrahmen und eine Mehrzahl von an dem Fahrzeugrahmen angebrachten Radbaugruppen, wobei wenigstens eine der Radbaugruppen einen länglichen Radträger mit einer Längsachse aufweist, an jedem der Längsenden des Radträgers ein um die Längsachse drehbares Rad, eine Antriebseinheit zum Antreiben der Räder, und eine Getriebevorrichtung, welche dazu ausgelegt ist, die Drehzahl einer Abtriebswelle der Antriebseinheit in eine Drehzahl der Räder zu untersetzen.

Als Schwerlastfahrzeuge werden Nutzfahrzeuge dann bezeichnet, wenn sie die Vorgaben der Straßenverkehrszulassungsordnung StVZO bezüglich der maximal zulässigen Fahrzeug-Abmessungen nach §32, der Kurvenlaufeigenschaften (zulässige überfahrene Ringflächenbreite bei einem bestimmten Außenradius) nach §32d oder die Einhaltung der maximal zulässigen Achslasten nach §34 nicht erfüllen und vom Betreiber nur mit entsprechenden Ausnahmegenehmigungen (nach §29 und §70) auf öffentlichen Straßen eingesetzt werden dürfen.

Derartige Nutzfahrzeuge werden beispielsweise von der Anmelderin in Form der selbstfahrenden Schwerlastfahrzeuge unter der Bezeichnung PST hergestellt und vertrieben. Diese Schwerlastfahrzeuge sind für Geschwindigkeiten bis zu 15 km/h ausgelegt und zugelassen. Sie verfügen daher über keine Betriebsbremse, sondern lediglich über eine Feststellbremse, die im Stillstand ein unbeabsichtigtes Wegrollen des Fahrzeugs verhindert. Die Funktion der Betriebsbremse wird durch eine entsprechende Ansteuerung der Antriebseinheiten der Radbaugruppen realisiert.

Die selbstfahrenden Schwerlastfahrzeuge PST haben den Nachteil, dass sie sich nicht für die schnelle Überbrückung großer Distanzen, beispielsweise mittels einer Überlandfahrt eignen.

Ferner gibt es nicht gattungsgemäße passive, d.h. nicht angetriebene, Fahrzeuge, die als reine Anhängerfahrzeuge für den Betrieb zusätzlich ein Zugfahrzeug benötigen. Mit diesen passiven Anhängerfahrzeugen können große Distanzen schnell überbrückt werden, da sie üblicherweise für Geschwindigkeiten von bis zu 80 km/h zugelassen sind. Nachteilig ist jedoch, dass es an Steigungen erforderlich sein kann, zusätzlich zu dem Zugfahrzeug ein weiteres Zugfahrzeug oder/und ein Schubfahrzeug vorzusehen.

In der Druckschrift WO 2013/167279 A1 ist ein Nutzfahrzeug gemäß dem Oberbegriff des Anspruchs 1 offenbart.

Ferner sei auf die EP 2 314 469 A2 sowie die WO 2014/053478 A1 verwiesen.

Es ist daher Aufgabe der vorliegenden Erfindung, ein Nutzfahrzeug der eingangs genannten Art bereitzustellen, welches sich für die schnelle Überbrückung von Distanzen eignet.

Diese Aufgabe wird erfindungsgemäß durch ein Nutzfahrzeug nach Anspruch 1 gelöst.

Das erfindungsgemäße Nutzfahrzeug kann zum einen die straßenverkehrsrechtliche Zulassung für schnelle Überlandfahrten erhalten, da die wenigstens eine Radbaugruppe eine Betriebsbremse aufweist, die für den Betrieb des Nutzfahrzeugs im öffentlichen Straßenverkehr bis zu Geschwindigkeiten von mehr als 25 km/h, vorzugsweise von bis zu mindestens 80 km/h, noch bevorzugter für den gesamten Geschwindigkeitsbereich von 0 km/h bis 80 km/h, zugelassen ist.

Da die Antriebseinheit zum Antreiben der Räder der wenigstens einen Radbaugruppe vorzugsweise nur bis zu einer niedrigeren vorbestimmten Geschwindigkeit, beispielsweise 15 km/h, ausgelegt ist, um die bei den bekannten selbstfahrenden Schwerlastfahrzeugen PST der Anmelderin verwendete Antriebseinheit weiterverwenden zu können, ergibt sich das Problem einer Überlastung der drehenden Komponenten der Antriebseinheit im passiven Nachlaufbetrieb bei Geschwindigkeiten von mehr als der niedrigeren vorbestimmten Geschwindigkeit. Daher ist erfindungsgemäß ferner eine Kupplungseinrichtung vorgesehen, welche die Kraftübertragungsverbindung zwischen der Antriebseinheit und den Rädern bei Geschwindigkeiten oberhalb der niedrigeren vorbestimmten Geschwindigkeit, unterbricht. In diesem Zustand kann das erfindungsgemäße Nutzfahrzeug als passives, d.h. nicht angetriebenes, Anhängerfahrzeug betrieben werden, das mittels eines Zugsfahrzeugs bewegt wird.

Kommt der aus dem Zugfahrzeug und dem erfindungsgemäßen Nutzfahrzeug gebildete Schleppzug an eine Steigung, so braucht kein zusätzliches Zug- und/oder Schubfahrzeug vorgesehen zu werden. Vielmehr ist es möglich, die Steigungsstrecke mit einer Geschwindigkeit zu durchfahren, die höchstens gleich der niedrigeren vorbestimmten Geschwindigkeit ist, so dass die Antriebseinheit(en) des Nutzfahrzeugs das Zugsfahrzeug unterstützen kann(können).

Aus Gründen der Betriebssicherheit ist es vorteilhaft, wenn die Kupplungsvorrichtung derart ausgelegt ist, dass sie die Kraftübertragungsverbindung zwischen der Antriebseinheit und den Rädern bei Überschreiten einer vorbestimmten Geschwindigkeit des Nutzfahrzeugs automatisch unterbricht.

Bei dem gattungsbildenden selbstfahrenden Schwerlastfahrzeug PST der Anmelderin sind sämtliche Komponenten in einem Hohlraum des Radträgers untergebracht. Es ist leicht einzusehen, dass das Vorsehen zusätzlicher Bauteile, nämlich der Kupplungseinrichtung und der Betriebsbremseinrichtung bei gleichem Bauraum nicht ohne Weiteres zu bewerkstelligen ist. Um dieser Problematik zu begegnen, ist erfindungsgemäß die Antriebseinheit außerhalb des Radträgers angeordnet, vorzugsweise in Fahrtrichtung des Nutzfahrzeugs hinter dem Radträger an diesen angebaut. Dabei kann ferner vorgesehen sein, dass die Abtriebswelle der Antriebseinheit im Wesentlichen orthogonal zur Drehachse der Räder verläuft.

Vorteilhafterweise kann vorgesehen sein, dass die Abtriebswelle der Antriebseinheit mit einem Differentialgetriebe verbunden ist, welches zwei Ausgangswellen umfasst, deren Drehachsen im Wesentlichen parallel zur Drehachse der Räder verlaufen. Ferner kann das Differentialgetriebe als Untersetzungsgetriebe ausgebildet sein oder/und ein Untersetzungsgetriebe umfassen.

Um klein bauende Komponenten verwenden zu können, insbesondere Komponenten, welche in dem Radträgergehäuse aufgenommen werden können, wird in Weiterbildung der Erfindung vorgeschlagen, dass jedem der Räder eine gesonderte Kupplung oder/und ein gesondertes Untersetzungsgetriebe oder/und eine gesonderte für den Betrieb des Nutzfahrzeugs im öffentlichen Straßenverkehr bis zu Geschwindigkeiten von mehr als 25 km/h zugelassene Bremse zugeordnet ist. Dabei bilden die beiden Kupplungen zusammen die vorstehend erwähnte Kupplungsvorrichtung oder/und bilden die beiden Bremsen zusammen die vorstehend erwähnte Bremsvorrichtung.

Um bei gleicher Spurweite der Radbaugruppe mehr Bauraum für die Aufnahme von Komponenten bereitstellen zu können, kann vorgesehen sein, dass die Radscheiben der Felgen der beiden Räder eine positive Einpresstiefe aufweisen. Von einer positiven Einpresstiefe spricht man dann, wenn die Radscheiben bezogen auf die Felgenmitte vom Radträger weg versetzt angeordnet sind. Hierdurch kann der Radträger länger ausgebildet werden, so dass auch der für die Aufnahme von Komponenten zur Verfügung stehende Innenraum des Radträgergehäuses größer ausgebildet werden kann.

Üblicherweise verfügen die beiden Räder einer Radbaugruppe jeweils über einen Zwillingsreifen. Dabei ist es insbesondere im Hinblick auf die Radmontage vorteilhaft, wenn die Feige des zwillingsbereiften Rads zwei Teilfelgen umfasst, nämlich für jeden der beiden Reifen der Zwillingsbereifung eine gesonderte Teilfelge. Da die beiden Teilfelgen aus Gründen der Betriebssicherheit einen Abstand voneinander aufweisen, ist die Felgenmitte in diesem Fall zwischen den beiden Teilfelgen angeordnet. Und auch die Radscheibe ist in diesem Fall aus zwei Teilradscheiben zusammengesetzt, von denen jede einer Teilfelge zugeordnet ist. Im an der Radnabe montierten Zustand des Zwillingsreifens liegen die beiden Teilradscheiben aneinander an.

Weisen die Räder der Radbaugruppe jeweils einen Zwillingsreifen auf, so ist es vorteilhaft, wenn die Einpresstiefe derart bemessen ist, dass die Radscheibe innerhalb der in Längsrichtung des Radträgers bestimmten Erstreckung des vom Radträger entfernt angeordneten, d.h. jeweils äußeren, Reifens des jeweiligen Rads angeordnet ist.

Wie dies an sich bekannt ist, ist der Radträger mittels eines Drehgestells um eine im Wesentlichen vertikal verlaufende Achse drehbar am Fahrzeugrahmen angebracht. Das Drehgestell umfasst dabei üblicherweise ein mit dem Fahrzeugrahmen verbundenes Drehlager, von welchem ein mit dem Drehlager starr verbundener Träger ausgeht. Am freien Ende des Trägers ist eine Schwinge angeordnet, welche relativ zum Träger um eine im Wesentlichen horizontale Achse schwenkbar gelagert ist. Am freien Ende der Schwinge und damit auch am freien Ende des Drehgestells, ist ein Pendellager angeordnet, mit welchem der Radträger verbunden ist. Die Pendellagerachse verläuft dabei vorzugsweise in einer zur Längsachse des Radträgers orthogonal verlaufenden Ebene. Bezüglich einer Relativschwenkbewegung um eine zur Längsachse des Radträgers im Wesentlichen parallel verlaufende Achse sind die Schwinge und der Radträger hingegen starr miteinander verbunden.

Ferner ist ein längenveränderliches Kraftgerät vorgesehen, das einenends am Drehlager oder/und am Träger abgestützt ist und andernends an der Schwinge abgestützt ist. Mittels dieses Kraftgeräts, das beispielsweise von einer, vorzugsweise hydraulisch betätigbaren, Kolben-Zylinder-Einheit gebildet sein kann, kann der Abstand des Radträgers vom Fahrzeugrahmen, beispielsweise im Sinne einer Niveauregulierung, verändert werden.

In diesem Zusammenhang wird ferner vorgeschlagen, dass eine Pendellagerachse und die Abtriebswelle der Antriebseinheit einen Winkel von zwischen etwa 8° und etwa 24°, vorzugsweise einen Winkel von zwischen etwa 12° und etwa 20°, noch bevorzugter einen Winkel von etwa 16°, miteinander einschließen. Dies hat den Vorteil, dass die außerhalb des Radträgers angeordnete Antriebseinheit sowohl im vollständig angehobenen Zustand des Radträgers nicht mit dem Fahrzeugrahmen kollidiert als auch im vollständig abgesenkten Zustand des Radträgers noch ausreichend Abstand von der Fahrfläche, auf der die Räder aufstehen, aufweist.

In Weiterbildung der Erfindung wird vorgeschlagen, dass wenigstens eine Antriebseinheit einen fluidisch, insbesondere hydraulisch, betreibbaren Motor, insbesondere einen Axialkolbenmotor, umfasst. Grundsätzlich ist es jedoch auch denkbar, dass wenigstens eine Antriebseinheit einen Elektromotor umfasst.

Falls die Antriebseinheit als Axialkolbenmotor ausgebildet ist, ist es vorteilhaft, wenn der zum einen von der Abtriebswelle des Axialkolbenmotors und zum anderen von der Längserstreckungsrichtung der Axialkolben des Axialkolbenmotors gebildete Knick des Axialkolbenmotors in einer zur Längsrichtung des Radträgers im Wesentlichen parallel verlaufenden Ebene angeordnet ist.

Ferner ist es vorteilhaft, wenn Anschlüsse zum Zu- und Abführen von Antriebsfluid zu und von der Antriebseinheit seitlich an der Antriebseinheit angeordnet sind.

Nach einem weiteren Gesichtspunkt betrifft die Erfindung ferner eine Radbaugruppe für ein Nutzfahrzeug. Bezüglich der Ausgestaltungsmöglichkeiten der erfindungsgemäßen Radbaugruppe sei auf die vorstehende Beschreibung des erfindungsgemäßen Nutzfahrzeugs verwiesen.

Die Erfindung wird im Folgenden an einem Ausführungsbeispiel mit Bezug auf die beigefügten Zeichnungen näher erläutert werden. Es stellt dar:
- Figur 1: eine schematische Seitenquerschnittsansicht eines erfindungsgemäßen Nutzfahrzeugs, insbesondere einer vertikal geschnittenen Radbaugruppe des erfindungsgemäßen Nutzfahrzeugs;
- Figur 2: die Radbaugruppe aus Figur 1 in einer horizontal geschnittenen schematischen Querschnittsansicht.

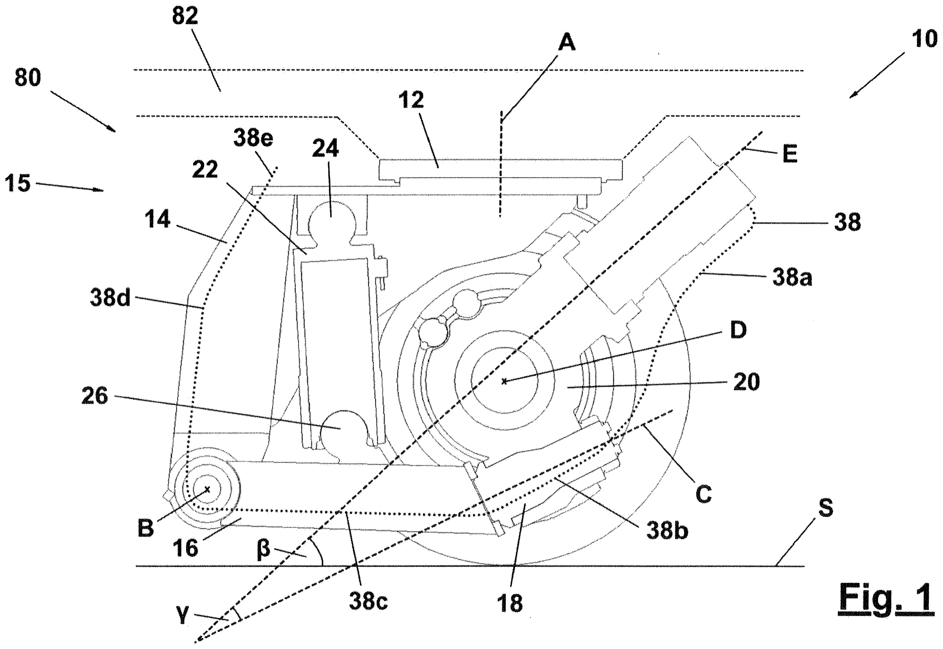

In Figur 1 sind ein erfindungsgemäßes Nutzfahrzeug 80 und dessen Rahmen 82 grob schematisch gestrichelt dargestellt. Das Nutzfahrzeug verfügt über eine Mehrzahl von Radbaugruppen 10, von denen in Figur 1 eine detailliert dargestellt ist.

Die Radbaugruppe 10 umfasst ein Drehlager 12, mittels dessen sie um eine im Wesentlichen vertikale Achse A drehbar mit dem Fahrzeugrahmen 82 des Nutzfahrzeugs 80 verbunden ist. Die Radbaugruppe 10 umfasst ferner einen mit dem Drehlager 12 fest verbundenen Träger 14, an dessen freiem Ende eine Schwinge 16 angeordnet ist. Die Schwinge 16 ist dabei an dem Träger 14 um eine im Wesentlichen horizontal verlaufende Achse B schwenkbar gelagert. An ihrem vom Träger 14 entfernten Ende weist die Schwinge 16 einen Lagerstutzen 18 auf. An dem Lagerstutzen 18 ist ein Radträger 20, welcher nachstehend noch im Detail beschrieben werden wird, um eine Pendelachse C schwenkbar gelagert.

Der Träger 14 und die Schwinge 16 stehen ferner über ein Kraftgerät 22 miteinander in Verbindung. Das Kraftgerät 22 ist in dem hier dargestellten Ausführungsbeispiel als fluidisch betätigbare Kolben-Zylinder-Einheit ausgeführt. Ein Ende des Kraftgeräts 22 ist mit dem Träger 14 über ein Kugel-Pfannen-Gelenk 24 drehbar gelagert, während das andere Ende des Kraftgeräts 22 mit der Schwinge 16 ebenfalls über ein Kugel-Pfannen-Gelenk 26 drehbar verbunden ist.

Das Drehlager 12, der Träger 14 und die Schwinge 16 bilden zusammen ein Drehgestell 15, mittels dessen der Radträger 20 im Sinne eines Niveauausgleichs an den Fahrzeugrahmen 82 angenähert und von diesem entfernt werden kann (Schwenkbewegung um die Achse B), im Sinne einer Lenkung des Nutzfahrzeugs 80 um die vertikale Achse A gedreht werden kann, und im Sinne eines Ausgleichs von Unebenheiten der Fahrfläche S um die Pendelachse C verschwenkt werden kann.

Nachzutragen ist, dass der Radträger 20 gegenüber Rotations- bzw. Schwenkbewegungen um andere Achsen als die Pendelachse C mit der Schwinge 16 bzw. mit dem dem Drehlager 12 entgegengesetzten, freien Ende des Drehgestells 15 starr verbunden ist.

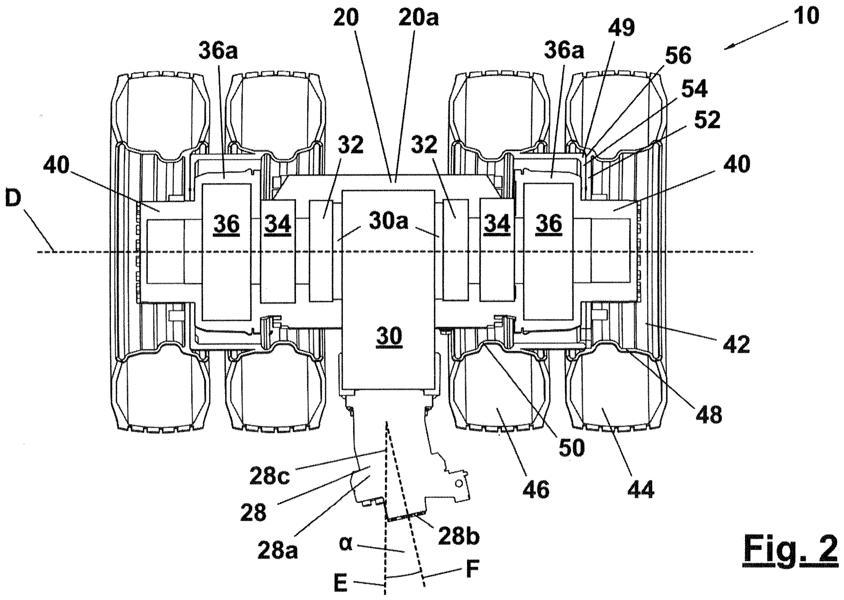

Figur 2 zeigt die Radbaugruppe 10, welche entlang einer horizontalen, zu einer Längsachse D des Radträgers 20 parallel verlaufenden Ebene geschnitten dargestellt ist.

Dem Radträger 20 ist eine Antriebseinheit 28 zugeordnet, welche in dem hier dargestellten Ausführungsbeispiel als ein hydraulisch betätigbarer Axialkolbenmotor ausgebildet ist, der außerhalb des Gehäuses 20a des Radträgers 20 angeordnet ist, und zwar bezogen auf die Vorwärtsfahrtrichtung des Nutzfahrzeugs 80 hinter dem Radträgergehäuse 20a. Die Antriebseinheit 28 ist dabei relativ zum Radträger 20 derart ausgerichtet, dass die Achse E der Abtriebswelle 28c der Antriebseinheit 28 im Wesentlichen orthogonal zur Längsachse D des Radträgers 20 verläuft.

Der für Axialkolbenmotoren typische Knick zwischen einer zu den Axialkolben des Axialkolbenmotors 28 parallel verlaufenden Achse F und der Achse E der Abtriebswelle 28c verläuft in dem dargestellten Ausführungsbeispiel in einer zur Längsachse D des Radträgers 20 im Wesentlichen parallelen Ebene. Wie dies an sich bekannt ist, kann der Anstellwinkel α zwischen den Achsen E und F durch geeignete Ansteuerung einer entsprechenden Mechanik 28a des Axialkolbenmotors verändert werden. Der Axialkolbenmotor 28 umfasst ferner Hydraulikanschlüsse 28b, welche auf zwei gegenüberliegenden Seiten des Axialkolbenmotors 28 in Bezug auf die Ebene angeordnet sind, welche in einer nicht-parallelen Ausrichtung der beiden Achsen E und F zueinander durch diese beiden Achsen definiert ist. Da eine zu der Achse F orthogonale Erstreckung der Mechanik 28a typischerweise größer ist als ein zur Achse F orthogonaler Abstand der Hydraulikanschlüsse 28b, ermöglicht es die voranstehend erwähnte Ausrichtung der Antriebseinheit 28 in Relation zum Radträger 20, die vertikale, z.B. zu der Achse A (s. Figur 1) parallele, Erstreckung der Antriebseinheit 28 gering zu halten, da diese durch den Abstand der Hydraulikanschlüsse 28b bestimmt ist.

Wie in Figur 2 dargestellt ist, steht die Abtriebswelle 28c der Antriebseinheit 28 mit einer ersten Getriebestufe 30 in Drehmoment übertragendem Eingriff. Die erste Getriebestufe 30 kann hierbei als bzw. mit einem Differentialgetriebe ausgebildet sein. Die erste Getriebestufe 30 weist zwei Abtriebsenden 30a auf, wobei das eine Abtriebsende 30a in Richtung des eines Längsendes des Radträgers 20 weist und das andere Abtriebsende 30a in Richtung des anderen Längsendes des Radträgers 20 weist. Die beiden Abtriebsenden 30a der ersten Getriebestufe 30 sind jeweils mit einer Kupplung 32 verbunden, die abtriebsseitig jeweils mit einer zweiten Getriebestufe 34 verbunden ist. Jede der beiden zweiten Getriebestufen 34 ist an ihrer der Kupplung 32 gegenüberliegen Seite mit einer Betriebsbremse 36 verbunden, die für den Betrieb des erfindungsgemäßen Nutzfahrzeugs 80 im öffentlichen Straßenverkehr bis zu Geschwindigkeiten von mehr als 25 km/h zugelassene Bremsvorrichtungen. Die Abtriebsseiten 36a der Betriebsbremsen 36 sind jeweils mit einer Radnabe 40 verbunden, die an dem Radträger 20 relativ zu diesem um eine zu der Längsachse D im Wesentlichen parallele Drehachse drehbar gelagert ist.

Die erste Getriebestufe 30, die beiden Kupplungen 32 sowie die beiden zweiten Getriebestufen 34 sind in dem Innenraum I des Gehäuses 20a des Radträgers 20 aufgenommen.

Die beiden Kupplungen 32 sind derart ausgebildet, dass sie dann, wenn sich das Nutzfahrzeug 80 mit einer Geschwindigkeit bewegt, die geringer als eine vorbestimmte Schaltgeschwindigkeit ist, Drehmomente von der ersten Getriebestufe 30 zur zweiten Getriebestufe 34 weiterleiten können. In diesem Zustand kann das Nutzfahrzeug 80 als selbstfahrendes Fahrzeug betrieben werden, das mittels der Antriebseinheiten 28 angetrieben werden kann. Auf diese Weise kann das Nutzfahrzeug 80 beispielsweise ein Zugfahrzeug, mit dem es verbunden ist, beim Überwinden einer Steigung unterstützen. Überschreitet die Geschwindigkeit des Nutzfahrzeugs 80 hingegen die vorbestimmte Schaltgeschwindigkeit, so öffnen die Kupplungen 32 automatisch, so dass die Drehmomentweiterleitung von der ersten Getriebestufe 30 zur zweiten Getriebestufe 34 unterbrochen ist. In diesem Zustand kann das Nutzfahrzeug 80 als reines Anhängerfahrzeug betrieben werden, das mittels des Zugfahrzeugs bewegt wird.

Von den Hydraulikanschlüssen 28b der Antriebseinheit 28 gehen zwei Haupt-Hydraulikleitungen 38 aus. Ein erster Abschnitt der Haupt-Hydraulikleitungen 38 ist in Figur 1 mit 38a bezeichnet, und der weitere Verlauf der Haupt-Hydraulikleitungen 38 ist in Figur 1 strichpunktiert angedeutet. Ein zweiter Abschnitt 38b der Haupt-Hydraulikleitungen 38 führt zwischen der Fahrbahn S und dem Radträger 20 hindurch. Dann verlaufen die Haupt-Hydraulikleitungen 38 vor und hinter der Schwinge 16 (Abschnitt 38c) und von dort vor und hinter dem Träger 14 im Wesentlichen vertikal nach oben (Abschnitt 38d) zum Fahrzeugrahmen 82, wo ihre Endabschnitte 38e zu erkennen sind.

Um diesen Verlauf zu ermöglichen, ist die Schwinge 16 erfindungsgemäß in der Fahrzeugbreitenrichtung schmal ausgebildet. Dies wird insbesondere durch die erfindungsgemäße Ausbildung des Kugel-Pfannen-Gelenks 26 ermöglicht. Und zwar ist die Pfanne des Kugel-Pfannen-Gelenks 26 aufseiten des Kraftgeräts 22 und ist die Kugel des Kugel-Pfannen-Gelenks 26 aufseiten der Schwinge 16 ausgebildet. Diese Ausführung der Lagerung des Kraftgeräts 22 an der Schwinge 16 erlaubt es, die Schwinge 16, im Vergleich zu einer Anordnung der Kugel des Kugel-Pfannen-Gelenks 26 an dem Kraftgerät 22 und der Pfanne des Kugel-Pfannen-Gelenks 26 an der Schwinge 16, platzsparender, insbesondere in einer zur Blattebene der Figur 1 senkrechten Richtung schmaler, auszuführen.

Nachzutragen ist noch, dass die Pfanne des Kugel-Pfannen-Gelenks 24 dem Träger 14 und die Kugel des Kugel-Pfannen-Gelenks 24 dem Kraftgerät 22 zugeordnet sind.

An jeder der Radnaben 40 ist ein Rad 42 mit einer Zwillingsbereifung angeordnet, wobei jede Zwillingsbereifung einen inneren, d.h. einen der Antriebseinheit 28 benachbarten, Reifen 46 und einen äußeren, d.h. einen auf der von der Antriebseinheit 28 abgewandten Seite des inneren Reifens 46 angeordneten, Reifen 44 aufweist. Jeder der beiden äußeren Reifen 44 umfasst eine Felge 48 und jeder der beiden inneren Reifen 46 umfasst eine Felge 50. Jeder der Felgen 48 ist eine Radscheibe 52 zugeordnet und jeder der Felgen 50 ist eine Radscheibe 54 zugeordnet. In dem an der Radnabe 40 montierten Zustand des Zwillingsreifens liegen die beiden Teilradscheiben 52 und 54 aneinander an.

Die beiden Radscheiben 52 und 54 können auch als "Teilradscheiben" einer Radscheibe 56 des Rads 42 bezeichnet werden. Analog können die beiden Felgen 48 und 50 als "Teilfelgen" einer diese beiden Teilfelgen 48 und 50 umfassenden Felge 49 des Rads 42 bezeichnet werden.

Die beiden Teilfelgen 48 und 50 bzw. deren Teilradscheiben 52 und 54 wiesen in dem dargestellten Ausführungsbeispiel voneinander unterschiedliche Einpresstiefen auf. Dabei sind die Einpresstiefen derart gewählt, dass die Radscheibe 56 der Felge 49 des Rads 42 innerhalb der in Längsrichtung des Radträgers 20 bestimmten Erstreckung des äußeren Reifens 44 angeordnet ist. Auf diese Weise kann, bei unveränderter Spurweite der Räder 42, der Radträger 20 länger ausgebildet sein, so dass auch der für die Aufnahme der vorstehend erwähnten Komponenten zur Verfügung stehende Innenraum I des Radträgers 20 größer ausgebildet sein kann.

Wie aus Figur 1 ersichtlich, verändert sich der Anstellwinkel β, den die Achse E der Abtriebswelle 28c der Antriebseinheit 28 mit der Fahrbahnebene S einschließt, wenn der Radträger 20 über die Schwinge 16 relativ zum Fahrzeugrahmen 82 um die Achse B verschwenkt wird. Um zu gewährleisten, dass die Antriebseinheit 28, insbesondere bei Lenkvorgängen, weder bei vollständig eingezogenem Radträger 20 mit Komponenten des Nutzfahrzeugs 80 kollidiert, noch bei vollständig ausgefahrenem Radträger 20 mit beispielsweise der Fahrbahn S kollidiert, beträgt der Anstellwinkel β bei vollständig eingezogenem Radträger 20 (siehe Figur 1) zwischen etwa 34° und etwa 50°, vorzugsweise zwischen etwa 38° und etwa 46°, noch bevorzugter etwa 42°, während er bei vollständig ausgefahrenem Radträger 20 zwischen etwa -19,5° und etwa -3,5°, vorzugsweise zwischen etwa -15,5° und etwa -7,5°, noch bevorzugter etwa -11,5°, beträgt.

Nachzutragen ist noch, dass der Winkel γ zwischen der Pendellagerachse C und der Abtriebswelle 28c der Antriebseinheit 28 zwischen etwa 8° und etwa 24°, vorzugsweise zwischen etwa 12° und etwa 20°, noch bevorzugter etwa 16°, beträgt.

## Patentansprüche

1. Nutzfahrzeug (80), insbesondere Schwerlastfahrzeug, umfassend
• einen Fahrzeugrahmen (82) und
• eine Mehrzahl von an dem Fahrzeugrahmen (82) angebrachten Radbaugruppen (10),
wobei wenigstens eine der Radbaugruppen (10) aufweist:
• einen länglichen Radträger (20) mit einer Längsachse (D),
• an jedem der Längsenden des Radträgers (20) ein um die Längsachse (D) drehbares Rad (42),
• eine Antriebseinheit (28) zum Antreiben der Räder (42),
• eine Getriebevorrichtung (30, 34), welche dazu ausgelegt ist, die Drehzahl einer Abtriebswelle (28c) der Antriebseinheit (28) in eine Drehzahl der Räder (42) zu untersetzen,
wobei die wenigstens eine Radbaugruppe (10) ferner umfasst:
• eine Kupplungsvorrichtung (32), welche eine Kraftübertragungsverbindung zwischen der Antriebseinheit (28) und den Rädern (42) wahlweise unterbricht oder herstellt, und
• eine für den Betrieb des Nutzfahrzeugs im öffentlichen Straßenverkehr bis zu Geschwindigkeiten von mehr als 25 km/h zugelassene Bremsvorrichtung (36),
**dadurch gekennzeichnet, dass** die Antriebseinheit (28) außerhalb des Radträgers (20) angeordnet ist.

2. Nutzfahrzeug nach Anspruch 1,
**dadurch gekennzeichnet, dass** die Kupplungsvorrichtung (32) derart ausgelegt ist, dass sie die Kraftübertragungsverbindung zwischen der Antriebseinheit (28) und den Rädern (42) bei Überschreiten einer vorbestimmten Geschwindigkeit des Nutzfahrzeugs automatisch unterbricht.

3. Nutzfahrzeug nach Anspruch 1 oder 2,
**dadurch gekennzeichnet, dass** die Abtriebswelle (28c) der Antriebseinheit (28) im Wesentlichen orthogonal zur Drehachse (D) der Räder (42) verläuft.

4. Nutzfahrzeug nach Anspruch 3,
**dadurch gekennzeichnet, dass** die Abtriebswelle (28c) der Antriebseinheit (28) mit einem Differentialgetriebe (30) verbunden ist, welches zwei Ausgangswellen (30a) umfasst, deren Drehachsen im Wesentlichen parallel zur Drehachse (D) der Räder (42) verläuft.

5. Nutzfahrzeug nach einem der Ansprüche 1 bis 4,
**dadurch gekennzeichnet, dass** jedem der Räder (42) eine gesonderte Kupplung (32) oder/und ein gesondertes Untersetzungsgetriebe (34) oder/und eine gesonderte für den Betrieb des Nutzfahrzeugs im öffentlichen Straßenverkehr bis zu Geschwindigkeiten von mehr als 25 km/h zugelassene Bremse (36) zugeordnet ist.

6. Nutzfahrzeug nach einem der Ansprüche 1 bis 5,
**dadurch gekennzeichnet, dass** die Radscheiben (56) der Felgen (49) der beiden Räder (42) eine positive Einpresstiefe aufweisen.

7. Nutzfahrzeug nach Anspruch 6, bei welchem die Räder (42) der Radbaugruppe (10) jeweils einen Zwillingsreifen aufweisen,
**dadurch gekennzeichnet, dass** die Einpresstiefe derart bemessen ist, dass die Radscheibe (56) innerhalb der Erstreckung des vom Radträger (20) entfernt angeordneten Reifens (44) des jeweiligen Rads (42) angeordnet ist.

8. Nutzfahrzeug nach einem der Ansprüche 1 bis 7,
bei welchem der Radträger (20) mit dem Fahrzeugrahmen (82) über ein am Fahrzeugrahmen (82) drehbar gelagertes Drehgestell (15) verbunden ist, **dadurch gekennzeichnet, dass** der Radträger (20) mit dem freien Ende des Drehgestells (15) bezüglich einer Relativschwenkbewegung um eine zur Längsachse (D) des Radträgers (20) im Wesentlichen parallel verlaufende Achse starr verbunden ist.

9. Nutzfahrzeug nach einem der Ansprüche 1 bis 8,
**dadurch gekennzeichnet, dass** eine Pendellagerachse (C) und die Abtriebswelle (28c) der Antriebseinheit (28) einen Winkel (γ) von zwischen etwa 8° und etwa 24°, vorzugsweise zwischen etwa 12° und etwa 20°, noch bevorzugter etwa 16°, miteinander einschließen.

10. Nutzfahrzeug nach einem der Ansprüche 1 bis 9,
**dadurch gekennzeichnet, dass** wenigstens eine Antriebseinheit (28) einen fluidisch, insbesondere hydraulisch, betreibbaren Motor, insbesondere einen Axialkolbenmotor, umfasst.

11. Nutzfahrzeug nach Anspruch 10,
**dadurch gekennzeichnet, dass** der zum einen von der Abtriebswelle (28c) des als Axialkolbenmotor (28) ausgeführten Motors der Antriebseinheit und zum anderen von der Längserstreckungsrichtung (F) der Axialkolben des Axialkolbenmotors (28) gebildete Knick (E-F) des Axialkolbenmotors (28) in einer zur Längsrichtung (D) des Radträgers (20) im Wesentlichen parallel verlaufenden Ebene angeordnet ist.

12. Nutzfahrzeug nach Anspruch 10 oder 11,
**dadurch gekennzeichnet, dass** Anschlüsse (28b) zum Zu- und Abführen von Antriebsfluid zu und von der Antriebseinheit (28) seitlich an der Antriebseinheit (28) angeordnet sind.

13. Nutzfahrzeug nach einem der Ansprüche 1 bis 12,
**dadurch gekennzeichnet, dass** die Betriebsbremse (36) für den gesamten Geschwindigkeitsbereich von 0 km/h bis 80 km/h zugelassen ist.

14. Radbaugruppe (10) für ein Nutzfahrzeug (80),
**gekennzeichnet durch** die Merkmale der wenigstens einen Radbaugruppe gemäß wenigstens eines der vorstehenden Ansprüche.

## Claims

1. Commercial vehicle (80), in particular a heavy-duty vehicle, comprising
• a vehicle frame (82) and
• a plurality of wheel assemblies (10) mounted on the vehicle frame (82),
at least one of the wheel assemblies (10) comprising:
• an elongate wheel carrier (20) having a longitudinal axis (D);
• a wheel (42) that is rotatable about the longitudinal axis (D) at each of the longitudinal ends of the wheel carrier (20);
• a drive unit (28) for driving the wheels (42); and
• a transmission device (30, 34), which is designed to lower the rotational speed of a driven shaft (28c) of the drive unit (28) to a rotational speed of the wheels (42),
the at least one wheel assembly (10) further comprising:
• a clutch device (32) that selectively interrupts or establishes a power transmission connection between the drive unit (28) and the wheels (42), and
• a brake device (36) that is approved for the operation of the commercial vehicle on public roads up to speeds of more than 25 km/h,
**characterised in that** the drive unit (28) is arranged outside the wheel carrier (20).

2. Commercial vehicle according to claim 1,
**characterised in that** the clutch device (32) is designed so as to automatically interrupt the power transmission connection between the drive unit (28) and the wheels (42) when a predetermined speed of the commercial vehicle is exceeded.

3. Commercial vehicle according to claim 1 or 2,
**characterised in that** the driven shaft (28c) of the drive unit (28) extends substantially orthogonally to the axis of rotation (D) of the wheels (42).

4. Commercial vehicle according to claim 3,
**characterised in that** the driven shaft (28c) of the drive unit (28) is connected to a differential gear (30) comprising two output shafts (30a) having axes of rotation that are substantially parallel to the axis of rotation (D) of the wheels (42).

5. Commercial vehicle according to any of claims 1 to 4,
**characterised in that** a separate clutch (32) and/or a separate reducing gear (34) and/or a separate brake (36) that is approved for the operation of the commercial vehicle on public roads up to speeds of more than 25 km/h is assigned to each of the wheels (42).

6. Commercial vehicle according to any of claims 1 to 5,
**characterised in that** the wheel disks (56) of the rims (49) of the two wheels (42) have a positive offset.

7. Commercial vehicle according to claim 6, in which each of the wheels (42) of the wheel assembly (10) includes dual tires,
**characterised in that** the offset is dimensioned such that the wheel disk (56) is arranged within the extension of the tire (44) of the respective wheel (42) arranged the furthest from the wheel carrier (20).

8. Commercial vehicle according to any of claims 1 to 7,
in which the wheel carrier (20) is connected to the vehicle frame (82) by way of a bogie (15) that is rotatably mounted on the vehicle frame (82),
**characterised in that** the wheel carrier (20) is rigidly connected to the free end of the bogie (15) with respect to a relative pivoting movement about an axis that is substantially parallel to the longitudinal axis (D) of the wheel carrier (20).

9. Commercial vehicle according to any of claims 1 to 8,
**characterised in that** a self-aligning bearing axis (C) and the driven shaft (28c) of the drive unit (28) form an angle (γ) between approximately 8° and approximately 24°, preferably between approximately 12° and approximately 20°, and still more preferably of approximately 16° with one another.

10. Commercial vehicle according to any of claims 1 to 9,
**characterised in that** at least one drive unit (28) comprises a fluidically, and in particular hydraulically, operable motor, and in particular an axial piston motor.

11. Commercial vehicle according to claim 10,
**characterised in that** the bend (E-F) of the axial piston motor (28) formed by the driven shaft (28c) of the motor of the drive unit, which motor is designed as an axial piston motor (28), and by the longitudinal direction of extension (F) of the axial piston of the axial piston motor (28) is arranged in a plane that extends substantially parallel to the longitudinal direction (D) of the wheel carrier (20).

12. Commercial vehicle according to claim 10 or 11,
**characterised in that** connections (28b) for feeding and discharging drive fluid to and from the drive unit (28) are arranged laterally on the drive unit (28).

13. Commercial vehicle according to any of claims 1 to 12,
**characterised in that** the service brake (36) is approved for the entire speed range of 0 km/h to 80 km/h.

14. Wheel assembly (10) for a commercial vehicle (80),
**characterised by** the features of the at least one wheel assembly according to at least one of the preceding claims.

## Revendications

1. Véhicule utilitaire (80), en particulier poids lourd, comprenant
• un châssis de véhicule (82) et
• une pluralité d'ensembles de roues (10) montés sur le châssis de véhicule (82),
au moins un des ensembles de roues (10) comprenant :
• un support de roue allongé (20) ayant un axe longitudinal (D),
• une roue (42) pouvant tourner autour de l'axe longitudinal (D) à chacune des extrémités longitudinales du support de roue (20),
• une unité d'entraînement (28) pour entraîner les roues (42),
• un dispositif de transmission (30, 34) adapté pour traduire la vitesse d'un arbre de sortie (28c) de l'unité d'entraînement (28) en une vitesse des roues (42),
ledit au moins un ensemble de roues (10) comprenant en outre :
• un dispositif d'accouplement (32) pour interrompre ou établir sélectivement une connexion de transmission de puissance entre l'unité d'entraînement (28) et les roues (42) ; et
• un dispositif de freinage (36) autorisé pour le fonctionnement du véhicule utilitaire sur la voie publique à des vitesses supérieures à 25 km/h,
**caractérisé en ce que** l'unité d'entraînement (28) est disposée à l'extérieur du support de roue (20).

2. Véhicule utilitaire selon la revendication 1,
**caractérisé en ce que** le dispositif d'accouplement (32) est adapté de telle sorte qu'il interrompt automatiquement la liaison de transmission de puissance entre l'unité d'entraînement (28) et les roues (42) lorsqu'une vitesse prédéterminée du véhicule utilitaire est dépassée.

3. Véhicule utilitaire selon la revendication 1 ou 2,
**caractérisé en ce que** l'arbre de sortie (28c) de l'unité d'entraînement (28) s'étend sensiblement orthogonalement à l'axe de rotation (D) des roues (42).

4. Véhicule utilitaire selon la revendication 3,
**caractérisé en ce que** l'arbre de sortie (28c) de l'unité d'entraînement (28) est relié à un engrenage différentiel (30) comprenant deux arbres de sortie (30a) dont les axes de rotation sont sensiblement parallèles à l'axe de rotation (D) des roues (42).

5. Véhicule utilitaire selon l'une quelconque des revendications 1 à 4,
**caractérisé en ce que** chacune des roues (42) est associée à un embrayage séparé (32) et/ou à un engrenage réducteur séparé (34) et/ou à un frein séparé (36) autorisé pour le fonctionnement du véhicule utilitaire sur la voie publique jusqu'à des vitesses supérieures à 25 km/h.

6. Véhicule utilitaire selon l'une des revendications 1 à 5,
**caractérisé en ce que** les disques de roue (56) des jantes (49) des deux roues (42) présentent un déport positif.

7. Véhicule utilitaire selon la revendication 6, dans lequel les roues (42) de l'ensemble de roues (10) comprennent chacune un pneu jumelé,
**caractérisé en ce que** le déport est tel que le disque de roue (56) est situé dans l'extension du pneu (44) de la roue respective (42) située à l'écart du support de roue (20).

8. Véhicule utilitaire selon l'une des revendications 1 à 7,
dans lequel le support de roue (20) est relié au châssis du véhicule (82) par l'intermédiaire d'un bogie (15) monté de manière rotative sur le châssis du véhicule (82),
**caractérisé en ce que** le support de roue (20) est relié rigidement à l'extrémité libre du bogie (15) par rapport à un mouvement de pivotement relatif autour d'un axe s'étendant sensiblement parallèlement à l'axe longitudinal (D) du support de roue (20).

9. Véhicule utilitaire selon l'une des revendications 1 à 8,
**caractérisé en ce qu'**un axe de palier à rotule (C) et l'arbre de sortie (28c) de l'unité d'entraînement (28) forment entre eux un angle (Y) compris entre environ 8° et environ 24°, de préférence entre environ 12° et environ 20°, plus préférablement environ 16°.

10. Véhicule utilitaire selon l'une des revendications 1 à 9,
**caractérisé en ce qu'**au moins une unité d'entraînement (28) comprend un moteur à commande fluidique, notamment hydraulique, en particulier un moteur à piston axial.

11. Véhicule utilitaire selon la revendication 10,
**caractérisé en ce que** le coude (E-F) du moteur à pistons axiaux (28) formé d'une part par l'arbre de sortie (28c) du moteur de l'unité d'entraînement adapté comme un moteur à pistons axiaux (28) et d'autre part par la direction d'extension longitudinale (F) des pistons axiaux du moteur à pistons axiaux (28) est disposé dans un plan s'étendant sensiblement parallèlement à la direction longitudinale (D) du support de roue (20).

12. Véhicule utilitaire selon la revendication 10 ou 11,
**caractérisé en ce que** des connexions (28b) pour fournir et retirer du fluide d'entraînement vers et depuis l'unité d' entraînement (28) sont disposées latéralement sur l'unité d' entraînement (28).

13. Véhicule utilitaire selon l'une des revendications 1 à 12,
**caractérisé en ce que** le frein de service (36) est autorisé pour toute la plage de vitesse de 0 km/h à 80 km/h.

14. Ensemble de roues (10) pour un véhicule utilitaire (80),
**caractérisé par** les caractéristiques dudit au moins un ensemble de roues selon l'une au moins des revendications précédentes.
